# EUROPEAN PATENT APPLICATION

(11) **EP 3 722 514 A1**
(43) Date of publication of application: **14.10.2020**
(21) Application number: 18884921.0
(22) Date of filing: 06.12.2018
(51) Int. Cl.: E02F 9/20, B60W 10/08, B60W 40/105, B60W 10/20

(54) **WHEEL SLIP CONTROL DEVICE AND METHOD FOR CONSTRUCTION MACHINERY**

(30) Priority: 07.12.2017 KR 20170167340
(71) Applicant: Doosan Infracore Co., Ltd., Incheon 22502 (KR)
(72) Inventor: SEO, Hyun Jae, Ansan-si Gyeonggi-do 15447 (KR); KIM, Kyeong Keun, Uiwang-si Gyeonggi-do 16049 (KR)
(74) Representative: Isarpatent
(86) International application number: PCT/KR2018/015422
(87) International publication number: WO 2019/112339

(57) **Abstract**

A wheel slip control device for construction machinery is disclosed. A wheel slip control device for construction machinery according to an embodiment includes a sensor configured to sense a speed and a torque of a motor which drives a wheel of a construction machine; a slip controller configured to control slip of the wheel based on the speed and the torque of the motor, sensed by the sensor; and a driving unit configured to drive the motor based on a torque set for the corresponding motor by the slip controller.

## Description

### [TECHNICAL FIELD]

The present disclosure relates to a wheel slip control device and method for construction machinery, and more particularly, to a wheel slip control device and method for construction machinery capable of controlling the wheel slip, which may occur during excavation works and steering of a construction machine, to be reduced.

### [DISCUSSION OF RELATED ART]

Recently, researches on a hybrid drive system that uses both an engine and a generator as a power source are increasing. In a general hybrid vehicle, such a generator produces electric energy and supplies it to an electric motor. The electric motor may generate a driving torque to drive a plurality of wheels.

The purpose of the wheel drive system of such a general hybrid vehicle is general traveling. Dissimilar to this, a construction machine having the hybrid drive system should frequently perform high-load works, while concurrently performing the general traveling. Accordingly, a plurality of wheels included in the construction machine having the hybrid drive system are driven by multiple electric motors, respectively, and the wheels may exert high torque on the ground according to the work environment.

In particular, in a construction machine that is driven by an all-wheel drive (AWD) scheme, a full-time four-wheel drive scheme, among the construction machines having the hybrid drive system, each electric motor (motor) is driven independently, so unlike general construction machines, a propeller shaft or a differential gear is not provided.

Accordingly, when such a construction machine performs an excavation work, a tire may slip due to separation between a rear wheel and the ground, and when the construction machine steers, the tire may also slip because it fails to automatically change the number of tire rotations.

In order to reduce consumption of high-cost tires and prevent unnecessary fuel consumption from decreasing the fuel efficiency of the construction machine, it is necessary to control the tire slip in the construction machine.

### [DETAILED DESCRIPTION OF THE INVENTION]

### [TECHNICAL OBJECTIVES]

Embodiments of the present disclosure are directed to a wheel slip control device and method for construction machinery which may control the wheel slip in real time when performing excavation works, climbing a slope, and steering, and hence the consumption of high-cost tires is reduced, and energy is not unnecessary wasted.

### [TECHNICAL SOLUTION TO THE PROBLEM]

According to an embodiment, a wheel slip control device for construction machinery includes a sensor configured to sense a speed and a torque of a motor which drives a wheel of a construction machine; a slip controller configured to control slip of the wheel based on the speed and the torque of the motor, sensed by the sensor; and a driving unit configured to drive the motor based on a torque set for the corresponding motor by the slip controller.

In some embodiments, the sensor may include a motor speed sensor for sensing the speed of each motor; and a motor toque sensor for sensing the torque of each motor.

In some embodiments, the motor speed sensor and the motor torque sensor may sense the speed and the torque of respective motors formed on a front left side, a front right side, a rear left side, and a rear right side, respectively.

In some embodiments, when the construction machine performs an excavation work, the slip controller may calculate a speed difference between a front motor and a rear motor on one side of left and right sides and set the torque of the corresponding motor based on the speed difference.

In some embodiments, when the step difference is less than a preset negative revolutions per minute (rpm), the torque of the rear motor on one side of left and right sides may be set.

In some embodiments, when the step difference is in a range between a preset negative rpm and a preset positive rpm, the torque of the motor may not be set.

In some embodiments, when the step difference is greater than a preset positive rpm, the torque of the front motor on one side of left and right sides may be set.

In some embodiments, the sensor may include a steering angle sensor for sensing a steering angle of the construction machine, and when the construction machine steers, the slip controller may set the torque of the motor on one side of left and right sides based on the steering angle.

In some embodiments, when the steering angle has a positive number, the torque of the motor on one side of left and right sides may be set, and when the steering angle has a negative number, the torque of the motor on the other side of the left and right sides may be set.

According to an embodiment, a wheel slip control device for construction machinery includes a sensor configured to sense a speed and a torque of a motor which drives a wheel of a construction machine; a slip controller configured to control slip of the wheel based on the speed and the torque of the motor, sensed by the sensor; and a driving unit configured to drive the motor based on a torque set for the corresponding motor by the slip controller. The sensor includes a motor speed sensor for sensing the speed of respective motors formed on a front left side, a front right side, a rear left side, and a rear right side, respectively; and a motor toque sensor for sensing the torque of the respective motors. When the construction machine performs an excavation work, the slip controller calculates a speed difference between a front motor and a rear motor on one side of left and right sides and sets the torque of the corresponding motor based on the speed difference.

According to an embodiment, a wheel slip control method for construction machinery includes receiving a speed and a torque of each motor which drives a wheel of a construction machine; calculating a speed difference between a front motor and a rear motor on one side of left and right sides; and setting a torque of each motor based on the speed difference.

In some embodiments, setting of the torque of each motor may include setting the torque of the rear motor on one side of left and right sides when the speed difference is less than a preset negative rpm.

In some embodiments, setting of the torque of each motor may include not setting the torque of the motor when the speed difference is in a range between a preset negative rpm and a preset positive rpm.

In some embodiments, setting of the torque of each motor may include setting the torque of the front motor on one side of left and right sides when the speed difference is greater than a preset positive rpm.

In some embodiments, the wheel slip control method for construction machinery may further include, after receiving the speed and the torque of each motor, determining whether the construction machine steers.

In some embodiments, in determining of whether the construction machine steers, in a case where it is determined that the construction machine steers, the torque of the motor on one side of left and right sides may be set based on a steering angle.

In some embodiments, in a case where the steering angle has a positive number, the torque of the motor on one side of left and right sides may be set, and in a case where the steering angle has a negative number, the torque of the motor on the other side of the left and right sides may be set.

### [EFFECTS OF THE INVENTION]

A construction machine according to embodiments of the present disclosure may control the wheel slip in real time, when performing excavation works, climbing a slope, and steering, and thereby the consumption of high-cost tires is reduced, and energy is not unnecessary wasted.

### [BRIEF DESCRIPTION OF THE DRAWINGS]

FIG. 1a is a cross-sectional view illustrating a construction machine according to an embodiment, and FIG. 1b is a cross-sectional view illustrating a wheel drive system of the construction machine.
FIG. 2 is a block diagram illustrating configuration of a wheel slip control device for construction machinery according to an embodiment.
FIG. 3 is a control logic illustrating a wheel slip control method for construction machinery according to an embodiment.
FIG. 4 is a graph illustrating an embodiment of the wheel slip control method of FIG. 3.
FIG. 5 is a graph illustrating another embodiment of the wheel slip control method of FIG. 3.

### <DESCRIPTION OF SYMBOLS>

100: wheel slip control device for construction machinery
110: motor speed sensor
120: motor torque sensor
130: steering angle sensor
140: slip controller
150: driving unit

### [DETAILED DESCRIPTION]

Embodiments will now be described more fully hereinafter with reference to the accompanying drawings so that those skilled in the art may easily implement them. The present inventive concept may be implemented in many different forms and is not limited to the embodiments described herein. In addition, in order to clearly describe the present inventive concept in the drawings, components irrelevant to the description are omitted, and Like reference numerals are used to designate like elements throughout the specification.

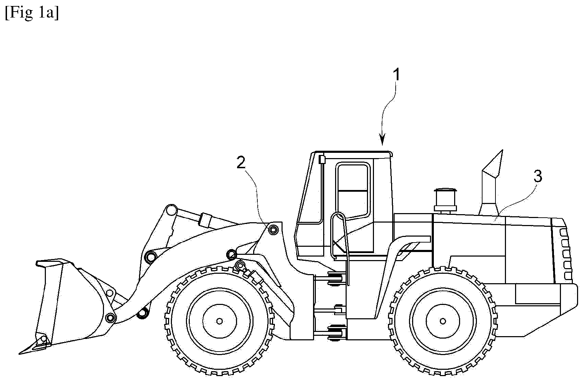

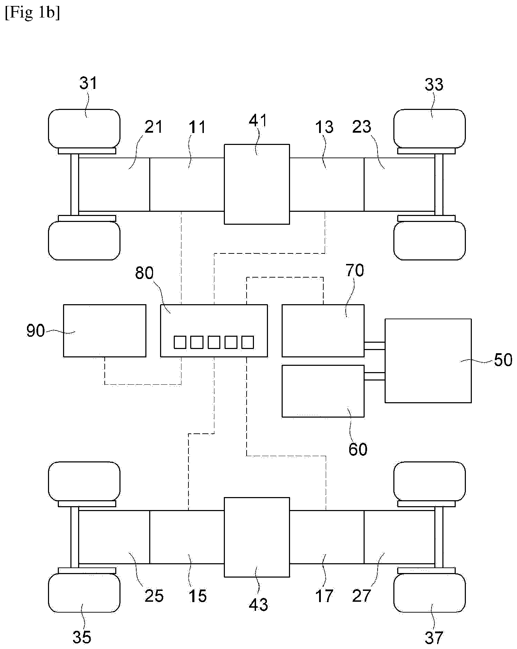

FIG. 1a is a cross-sectional view illustrating a construction machine according to an embodiment, and FIG. 1b is a cross-sectional view illustrating a wheel drive system of the construction machine.

Referring to Fig. 1b, a construction machine includes a generator 70 connected to an engine 50 to generate electric energy, an inverter 80 connected to the generator 70 to control each of motors 11, 13, 15 and 17 and connected to an energy storage 90, a front axle 41 on which front wheels 31 and 33, motors 11 and 13, and front hubs 21 and 23 for reducing revolutions per minute (rpm) of the motors 11 and 13 and increasing a torque are mounted, and a rear axle 43 on which rear wheels 35 and 37, motors 15 and 17, and rear hubs 25 and 27 for reducing rpm of the motors 15 and 17 and increasing a torque are mounted.

The wheels include a front left wheel 31, a front right wheel 33, a rear left wheel 35, and a rear right wheel 37, and the motors include a front left motor 11, a front right motor 13, a rear left motor 15, and a rear right motor 17.

As such, since the afore-mentioned construction machine may be driven, by virtue of its characteristics, by an all-wheel drive (AWD) scheme and by respectively controlling each motor, it is not provided with a propeller shaft or a differential gear, which is dissimilar to general construction machines, and accordingly, the wheels may slip during excavation works or steering.

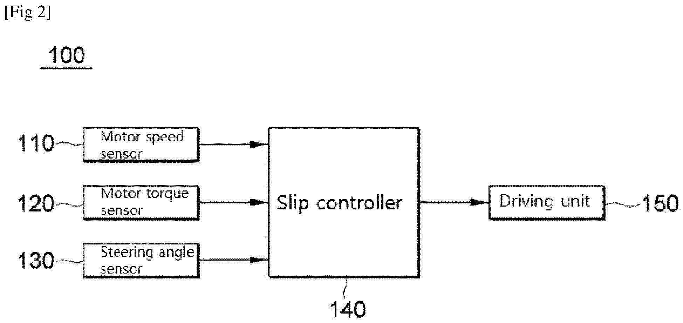

FIG. 2 is a block diagram illustrating configuration of a wheel slip control device for construction machinery according to an embodiment for preventing the occurrence of such a wheel slip.

The construction machine according to an embodiment may be driven by an AWD system.

Referring to Fig. 2, a wheel slip control device 100 of a construction machine according to an embodiment includes sensors 110 and 120 for sensing a speed and a torque of a motor of the construction machine, a slip controller 140 for controlling the wheel slip based on the speed of the motor sensed by the sensors 110 and 120, and a driving unit 150 for driving the wheel according to the torque which is set for the corresponding wheel by the slip controller 140.

The sensors 110 and 120 are connected by wire or wirelessly to the slip controller 140 and transmits, to the slip controller 140, corresponding data that indicates the condition of vehicle.

The sensors 110 and 120 include a motor speed sensor 110 for sensing the speed of each motor, and a motor torque sensor 120 that senses the torque of each motor.

The motor speed sensor 110 senses speeds of the front left motor 11, the front right motor 13, the rear left motor 15, and the rear right motor 17, respectively, and then transmits the speeds of the motors 11, 13, 15 and 17 to the slip controller 140.

The motor torque sensor 120 senses torques of the front left motor 11, the front right motor 13, the rear left motor 15, and the rear right motor 17, respectively, and then transmits the torques of the motors 11, 13, 15 and 17 to the slip controller 140.

The slip controller 140 controls wheel slip of the construction machine.

That is, when the construction machine performs an excavation work or climbs a slope, the slip controller 140 calculates a speed difference between the front motor and the rear motor and controls the wheel slip based on the speed difference.

When the construction machine performs an excavation work, the slip controller 140 calculates a speed difference between the front motor and the rear motor on one side of left and right sides and sets a torque of the corresponding motor based on the speed difference so as to control the construction machine.

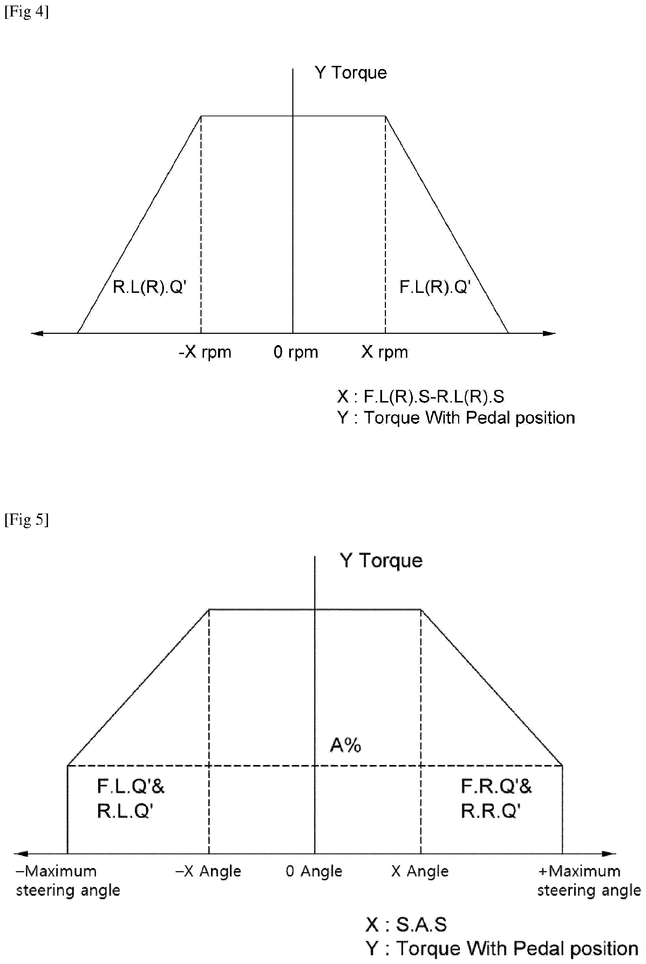

If a range of the speed difference between the front motor and the rear motor on one side of left and right sides is within a preset range (i.e., -X rpm ≤ speed difference ≤ X rpm) as illustrated in FIG. 4, the slip controller 140 controls the torque of the wheel to remain the same.

In such an embodiment, X rpm is a preset value, and may be set differently according to the type of construction machine, the condition of the ground, and the like.

If the speed difference is within the above range, it may be determined that no slip has occurred.

However, if the speed difference is outside the above range (speed difference < -X rpm, speed difference > X rpm), it is determined that a slip has occurred, and the torque of the front or rear motor on the corresponding side is to be set.

If the speed difference < -X rpm, the slip controller 140 determines that a slip has occurred and sets the torque of the rear motor on the corresponding side. In such an embodiment, the slip controller 140 controls the torque of the rear motor to be smaller, as the speed difference increases in the negative direction.

Through the control as in the above description, the torque of the rear wheel on the corresponding side where the wheel slip has occurred may be reduced, and thereby the wheel slip phenomenon of the rear wheel may be addressed.

The slip controller 140 also determines that a slip has occurred when the speed difference > X rpm, and sets the torque of the front motor on the corresponding side. In such an embodiment, the slip controller 140 controls the torque of the front motor to be smaller, as the speed difference increases in the positive direction.

As the torque of the front wheel on the corresponding side where the wheel slip has occurred is reduced, the wheel slip phenomenon of the front wheel may be addressed.

As such, according to an embodiment, the wheel slip phenomenon may be addressed, and hence unnecessary energy consumption may be reduced, and the wear of tires which are high-cost due to the characteristics of construction machine may be substantially prevented.

The sensor of the wheel slip control device 100 of the construction machine according to an embodiment may include a steering angle sensor 130 that senses a steering angle of the construction machine.

The steering angle sensor 130, which is for sensing an actual steering angle based on the speed and torque of each motor and a rotational radius of the wheels of the construction machine that includes a front vehicle unit 2 and a rear vehicle unit 3, may sense a steering angle of the construction machine and transmit the sensed steering angle to the slip controller 140.

In an embodiment, the steering angle sensor 130 may sense the steering angle of the construction machine through the use of a steering gear angle sensor and an angle sensor configured to sense a mutual angle between the front vehicle unit 2 and the rear vehicle unit 3 and may transmit the sensed steering angle to the slip controller 140.

When the construction machine steers, the slip controller 140 controls the wheel slip based on the steering angle.

In addition, even when steering and excavation works are concurrently performed or steering and slope climbing are concurrently performed, the slip controller 140 may control both operations concurrently so that no slip occurs in the wheel.

When the construction machine steers, the slip controller 140 sets the torque of the motor on one side of left and right sides based on the steering angle.

When the received steering angle is less than 0 (when turning right), the slip controller 140 controls the torque of the left motor to be set smaller.

Since the torque of the left motor where the wheel slip has occurred is reduced through the control, the wheel slip phenomenon of the left wheel may be addressed.

When the received steering angle is 0, the torques of the left and right motors are controlled to remain the same.

When the received steering angle is greater than 0 (when turning left), the slip controller 140 controls the torque of the right motor to be set smaller.

Since the torque of the right motor where the wheel slip has occurred is reduced through the control, the wheel slip phenomenon of the right wheel may be addressed.

The slip controller 140 may set the torque of the motor according to a steering angle range, as illustrated in FIG. 5.

That is, when the steering angle is within a preset range (angle -X ≤ steering angle ≤ angle X), the torques of the left and right motors may be controlled to remain the same. If the steering angle is within the above range, the slip controller 140 determines that no slip has occurred.

In such an embodiment, the angle X is a preset value, and may be set differently according to the type of construction machine, the condition of the ground, or the like.

When the steering angle is less than the angle -X (when turning right), the slip controller 140 may control the torque of the left motor to be set smaller, and in such a case, the torque of the left motor may be reduced down to A % of the received torque, to a maximum negative steering angle.

In such a case, the maximum steering angle and the torque reduction rate A % may be set differently according to the type of construction machine, the condition of the ground, the form of the ground, and the like.

When the steering angle is greater than the angle X (when turning left), the slip controller 140 may control the torque of the right motor to be set smaller, and in such a case, the torque of the right motor may be reduced down to A % of the received torque, to a maximum positive steering angle.

The driving unit 150 serves to drive the torque of the corresponding motor according to the torque set for the motor by the slip controller 140.

Construction machines working at construction sites may perform works in harsh conditions, for example, soils, slopes, and soft soils with different strengths, and construction machines such as wheel loaders may carry high-load construction materials in buckets.

In construction machines working under such conditions, wheel slips may occur continuously, but in embodiments of the present disclosure, however, such wheel slips may be controlled not to occur in such conditions.

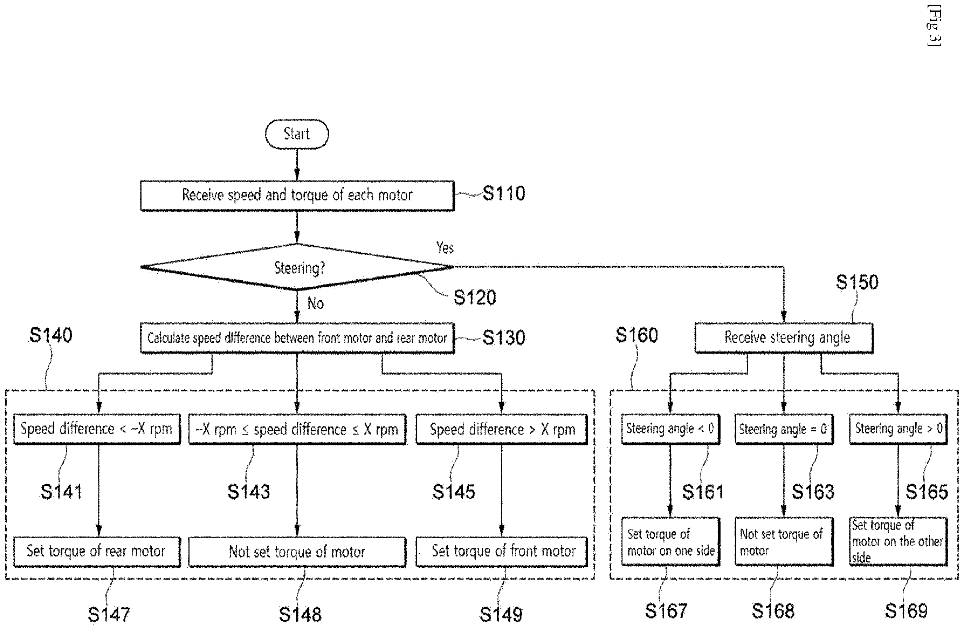

FIG. 3 is a control logic illustrating a wheel slip control method for construction machinery according to an embodiment.

Referring to Fig. 3, the wheel slip control method for construction machinery according to an embodiment includes receiving a speed and a torque of each motor of a construction machine (S110), calculating a speed difference between a front motor and a rear motor on one side of left and right sides (S130), and setting a torque of each motor based on the speed difference (S 140).

Calculating of the speed difference between the front motor and the rear motor on one side of left and right sides (S 130) is largely to control the wheel slip during excavation works, but the speed difference may also be calculated to control the wheel slip in the case of climbing a slope.

Setting the torque of each motor based on the speed difference (S 140) is performed such that when the construction machine performs an excavation work without steering, the speed difference between the front motor and the rear motor on one side of left and right sides is calculated and the torque of the corresponding motor is set based on the speed difference.

If a range of the speed difference between the front motor and the rear motor on one side of left and right sides is within a preset range (i.e., -X rpm ≤ speed difference ≤ X rpm) as illustrated in FIG. 4 (S143), the slip controller 140 controls the torque of the wheel to remain the same (S148).

In such an embodiment, X rpm is a preset value, and may be set differently according to the type of construction machine, the condition of the ground, and the like. In addition, R.L(R).Q', abbreviation of Rear Right Motor Torque, illustrated on the left side in FIG. 4, denotes a torque of the rear right motor, F.L(R).Q', abbreviation of Front Right Motor Torque, illustrated on the right side in FIG. 4, denotes a torque of the front right motor, and in an embodiment illustrated in FIG. 4, it will be described on the assumption that the torques of the front motor and the rear motor on the right side are controlled.

In such a case, if the speed difference is within the above range, it may be determined that no slip has occurred.

However, if the speed difference is outside the above range (speed difference < -X rpm, speed difference > X rpm), it is determined that a slip has occurred, and the torque of the front or rear motor on the corresponding side is to be set.

If the speed difference < -X rpm (S141), the slip controller 140 determines that a slip has occurred and sets the torque of the rear motor on the corresponding side (S 147). In such an embodiment, the slip controller 140 controls the torque of the rear motor to be smaller, as the speed difference increases in the negative direction.

Through the control as in the above description, the torque of the rear wheel on the corresponding side where the wheel slip has occurred may be reduced, and thereby the wheel slip phenomenon of the rear wheel may be addressed.

When the speed difference > X rpm (S 145), it is also determined that a slip has occurred and the torque of the front motor on the corresponding side is set (S 149). In such an embodiment, the slip controller 140 controls the torque of the front motor to be smaller, as the speed difference increases in the positive direction.

The wheel slip control method for construction machinery according to an embodiment may further include, after receiving the speed and torque of each motor, determining whether the construction machine steers (S 120).

In determining of whether the construction machine steers (S 120), if it is determined that the construction machine steers, the wheel slip control method may further include setting the torque of the motor on one side of left and right sides based on the steering angle (S160).

In addition, receiving of the steering angle (S150) is also preceded before setting the torque of the motor on one side of left and right sides based on the steering angle (S160).

It is to be understood that the slip controller 140 may also control the wheel not to slip when there is only steering, when there is only an excavation work without steering, or when there is only a slope climbing without steering. In addition, even when steering and an excavation work are performed concurrently or steering and slope climbing are performed concurrently, the slip controller 140 may concurrently control the wheel so that no slip occurs in the wheel.

When the received steering angle is less than 0 (when turning right) (S161), the slip controller 140 may control the torque of the left motor to be set smaller (S167), such that the torque of the left motor where the wheel slip has occurred is reduced, and the wheel slip phenomenon of the left wheel may be addressed.

When the received steering angle is 0 (S163), the torques of the left and right motors are controlled to remain the same (S168).

In addition, when the received steering angle is greater than 0 (when turning left) (S165), the slip controller 140 may control the torque of the right motor to be set smaller (S169), such that the torque of the right motor where the wheel slip has occurred is reduced, and the wheel slip phenomenon of the right wheel may be addressed.

In an embodiment, the slip controller 140 may set the torque of the motor according to a steering angle range, as illustrated in FIG. 5.

When the steering angle is within a preset range (angle -X ≤ steering angle ≤ angle X), the torques of the left and right motors may be controlled to remain the same. If the steering angle is within the above range, the slip controller 140 determines that no slip has occurred.

In such an embodiment, the angle X is a preset value, and may be set differently according to the type of construction machine, the condition of the ground, or the like. In addition, F.L.Q' & R.L.Q' illustrated on the left side in FIG. 5 represents the torque of the front and rear left motors, and F.R.Q' & R.R.Q' represents the torque of the front and rear right motors.

When the steering angle is less than the angle -X (when turning right), the slip controller 140 may control the torque of the left motor to be set smaller, and in such a case, the torque of the left motor may be reduced down to A % of the received torque, to a maximum negative steering angle.

In such a case, the maximum steering angle and the torque reduction rate A% may be set differently according to the type of construction machine, the condition of the ground, the form of the ground, and the like.

When the steering angle is greater than the angle X (when turning left), the slip controller 140 may control the torque of the right motor to be set smaller, and in such a case, the torque of the right motor may be reduced down to A % of the received torque, it may be controlled in real time so that the wheel slip does not occur, and thereby the consumption of high-cost tires may be reduced and unnecessary waste of energy may be prevented.

The above description of the present disclosure is for illustration only, and a person skilled in the technical field to which the present disclosure pertains may understand that it may be easily modified to other specific forms without changing the technical spirit or essential features of the present disclosure. Therefore, it should be understood that embodiments described above are illustrative in all respects and not restrictive. For example, each component described as a single type may be implemented in a distributed manner, and similarly, components described as distributed may be implemented in a combined form.

The scope of the present disclosure is defined by the following claims rather than the above detailed description, and it should be interpreted that all changes or modified forms derived from the meaning, scope of the claims, and equivalent concepts thereof are included in the scope of the present disclosure.

## Claims

1. A wheel slip control device for construction machinery, comprising:
a sensor configured to sense a speed and a torque of a motor which drives a wheel of a construction machine;
a slip controller configured to control slip of the wheel based on the speed and the torque of the motor, sensed by the sensor; and
a driving unit configured to drive the motor based on a torque set for the corresponding motor by the slip controller.

2. The wheel slip control device for construction machinery of claim 1, wherein the sensor comprises:
a motor speed sensor for sensing the speed of each motor; and
a motor toque sensor for sensing the torque of each motor.

3. The wheel slip control device for construction machinery of claim 2, wherein the motor speed sensor and the motor torque sensor sense the speed and the torque of respective motors formed on a front left side, a front right side, a rear left side, and a rear right side, respectively.

4. The wheel slip control device for construction machinery of claim 1, wherein when the construction machine performs an excavation work, the slip controller calculates a speed difference between a front motor and a rear motor on one side of left and right sides and the speed difference is one of values obtained by subtracting the speed of the rear motor from the speed of the front motor or subtracting the speed of the front motor from the speed of the rear motor, and the slip controller sets the torque of the corresponding motor based on the speed difference.

5. The wheel slip control device for construction machinery of claim 4, wherein when the speed difference is less than a preset negative revolutions per minute (rpm), the torque of the rear motor on one side of left and right sides is set.

6. The wheel slip control device for construction machinery of claim 4, wherein when the speed difference is in a range between a preset negative rpm and a preset positive rpm, the torque of the motor is not set.

7. The wheel slip control device for construction machinery of claim 4, wherein when the speed difference is greater than a preset positive rpm, the torque of the front motor on one side of left and right sides is set.

8. The wheel slip control device for construction machinery of claim 1, wherein the sensor comprises a steering angle sensor for sensing a steering angle of the construction machine, and
wherein when the construction machine steers, the slip controller sets the torque of the motor on one side of left and right sides based on the steering angle.

9. The wheel slip control device for construction machinery of claim 8, wherein when the steering angle has a positive number, the torque of the motor on one side of left and right sides is set, and when the steering angle has a negative number, the torque of the motor on the other side of the left and right sides is set.

10. A wheel slip control device for construction machinery, comprising:
a sensor configured to sense a speed and a torque of a motor which drives a wheel of a construction machine;
a slip controller configured to control slip of the wheel based on the speed and the torque of the motor, sensed by the sensor; and
a driving unit configured to drive the motor based on a torque set for the corresponding motor by the slip controller,
wherein the sensor comprises:
a motor speed sensor for sensing the speed of respective motors formed on a front left side, a front right side, a rear left side, and a rear right side, respectively; and
a motor toque sensor for sensing the torque of the respective motors, and
wherein when the construction machine performs an excavation work, the slip controller calculates a speed difference between a front motor and a rear motor on one side of left and right sides and sets the torque of the corresponding motor based on the speed difference,
and wherein the speed difference is one of values obtained by subtracting the speed of the rear motor from the speed of the front motor or subtracting the speed of the front motor from the speed of the rear motor,.

11. A wheel slip control method for construction machinery, comprising:
receiving a speed and a torque of each motor which drives a wheel of a construction machine;
calculating a speed difference between a front motor and a rear motor on one side of left and right sides; and
setting a torque of each motor based on the speed difference,
wherein the speed difference is one of values obtained by subtracting the speed of the rear motor from the speed of the front motor or subtracting the speed of the front motor from the speed of the rear motor.

12. The wheel slip control method for construction machinery of claim 11, wherein setting of the torque of each motor comprises setting the torque of the rear motor on one side of left and right sides when the speed difference is less than a preset negative rpm.

13. The wheel slip control method for construction machinery of claim 11, wherein setting of the torque of each motor comprises not setting the torque of the motor when the speed difference is in a range between a preset negative rpm and a preset positive rpm.

14. The wheel slip control method for construction machinery of claim 11, wherein setting of the torque of each motor comprises setting the torque of the front motor on one side of left and right sides when the speed difference is greater than a preset positive rpm.

15. The wheel slip control method for construction machinery of claim 11, further comprising, after receiving the speed and the torque of each motor, determining whether the construction machine steers.

16. The wheel slip control method for construction machinery of claim 15, wherein in determining of whether the construction machine steers, in a case where it is determined that the construction machine steers, the torque of the motor on one side of left and right sides is set based on a steering angle.

17. The wheel slip control method for construction machinery of claim 16, wherein in a case where the steering angle has a positive number, the torque of the motor on one side of left and right sides is set, and in a case where the steering angle has a negative number, the torque of the motor on the other side of the left and right sides is set.
